# EUROPÄISCHE PATENTSCHRIFT

(11) **EP 2 997 274 B1**
(45) Veröffentlichungstag und Bekanntmachung des Hinweises auf die Patenterteilung: **13.03.2019**
(21) Anmeldenummer: 14724070.9
(22) Anmeldetag: 13.05.2014
(51) Int. Cl.: F16D 1/08

(54) **WELLENKUPPLUNG FÜR EINE WALZENANORDNUNG**
SHAFT COUPLING FOR A ROLLER ASSEMBLY
ACCOUPLEMENT D'ARBRES POUR ENSEMBLE DE ROULEAUX

(30) Priorität: 17.05.2013 AT 4152013
(43) Veröffentlichungstag der Anmeldung: 23.03.2016
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Christoph, Cep.: 82410-040 Curitiba - Paraná (BR); JIRASCHEK, Stefan, A-2202 Königsbrunn (AT)
(74) Vertreter: Puchberger & Partner Patentanwälte
(86) Internationale Anmeldenummer: PCT/EP2014/059707
(87) Internationale Veröffentlichungsnummer: WO 2014/184168

(56) Entgegenhaltungen:
- GB-A- 222 662
- US-A- 1 947 959
- US-A- 3 147 985
- US-A- 5 162 119

## Beschreibung

Die Erfindung betrifft eine Walzenanordnung zur Bearbeitung von Formkörpern oder Teigbändern zur Herstellung von Backprodukten wie beispielsweise Keks und dergleichen, umfassend eine Walze, ein Maschinengestell und eine Wellenkupplung zur Kupplung eines Wellenzapfens mit polygonförmigem Querschnitt mit einem Antrieb oder einer Lagerachse, umfassend einen rotatorisch antreibbaren oder angetriebenen Kupplungskörper, der eine Kupplungsöffnung zur Aufnahme des Wellenzapfens aufweist, wobei der Kupplungskörper einen ersten Kupplungsteil und einen zweiten Kupplungsteil umfasst und entlang einer Teilungslinie, welche die Kupplungsöffnung schneidet, öffenbar ausgeführt ist. Weiters ist eine Spannvorrichtung zur kraftschlüssigen Halterung des Wellenzapfens in der Kupplungsöffnung vorgesehen, und die Kupplungsöffnung ist zumindest teilweise durch Klemmbacken gebildet, die in geschlossener Stellung über die Spannvorrichtung, bevorzugt flächig, an den Wellenzapfen gedrückt sind.

Walzenanordnungen zur Bearbeitung von Teigbändern sind allgemein bekannt. Bei herkömmlichen Vorrichtungen wird ein Teigband über ein Förderband in den Bereich einer Walze geleitet. Zwischen der Walze und dem Förderband ist zumindest teilweise ein Walzenspalt vorgesehen, der dazu eingerichtet ist, den Teig zu verdünnen, auszuwalzen, auszustechen oder formgebend zu bearbeiten. Die Walze ist über einen Antrieb rotatorisch angetrieben. In regelmäßigen Abständen, insbesondere zur Wartung oder Reinigung der Walzen sowie beim Produktwechsel bei Ausstechwalzen müssen die Walzen aus der Walzenanordnung entnommen werden.

In herkömmlichen Walzenanordnungen sind die Wellenzapfen der Walzen in üblichen Lagerungen eingespannt. Dies bedeutet, dass eine Los-/Festlageranordnung vorgesehen ist, bei der die Lager über einen Lagerbock fest verschraubt sind. Ferner ist bei herkömmlichen Konstruktionen der Antrieb über einen verschraubten Flansch mit der Walze verbunden. Um die Walze zu entfernen, müssen einerseits die gesamte Lagerung, d.h. der Lagerbock jedes einzelnen Lagers sowie die Verbindung mit dem Antrieb getrennt werden. Dies ist mit hohem Aufwand und mit langen, ungewünschten Stehzeiten der Vorrichtung verbunden.

Bei Laufrollen aus der Papierindustrie sind Schnellverschlüsse für Laufwalzen bekannt. Bei diesen weist die Walze beidseitig auskragende Wellenzapfen mit polygonförmigen Querschnitten auf. Diese polygonförmigen Wellenzapfen werden, ähnlich einem Schraubenschlüssel, in komplementäre Ausnehmungen der Wellenlagerungen eingelegt. Durch die Polygonverbindung ist eine Drehverbindung mit dem Antrieb gegeben. Jedoch muss, um die Einführbarkeit des Wellenzapfens in die Polygonausnehmung zu ermöglichen, ein gewisses Übermaß bzw. eine Spielpassung vorhanden sein.

Zur Bearbeitung von Teigbändern oder Formkörpern ist diese spielbehaftete Lagerung jedoch nicht einsetzbar, da es z.B. durch Dichteänderungen, Dickeänderungen oder Viskositätsänderungen des Teiges oder auch durch die Bearbeitung an sich zu unregelmäßigen Belastungen und Stößen kommt. Bei längeren Einsatzzeiten kommt es dadurch in weiterer Folge zu starkem Verschleiß im Bereich der Polygonverbindung.

Herkömmliche Walzenanordnungen sind aus US 3 147 985 A, der US 1 947 959 A und der US 5 162 119 A bekannt.

Aus der angeführten US 3 147 985 A ist ein antreibendes Spannfutter bekannt. Nachteilig an diesem Spannfutter ist aber unter anderem, dass dieses mit der anzutreibenden Achse durch Schrauben fixiert ist wodurch ein Wechsel der Walzen mit hohem Aufwand verbunden ist.

Aus der angeführten US 1 947 959 A sind Kreuzgelenke, sogenannte Hook's Gelenke, bekannt. Nachteilig an dieser Konstruktion ist es, dass zur Fixierung einer Stange ein ringähnlicher Klemm-/Spanndraht verwendet wird, welcher zur Fixierung der Stange über die beiden trennbaren Segmentteile des Gelenks geklappt wird. Nachteilig an dieser Konstruktion ist aber unter anderem der hohe Platzbedarf wodurch diese Konstruktion nicht für den erfindungsgemäßen Einsatz geeignet ist.

Aufgabe der Erfindung ist es nun, eine Vorrichtung bereitzustellen, bei der einerseits die Wartung und Auswechselbarkeit der Walzen vereinfacht ist und andererseits die Standzeit durch eine verschleißarme Kupplung erhöht ist.

Die erfindungsgemäße Aufgabe wird insbesondere durch die Merkmale der unabhängigen Ansprüche gelöst.

Insbesondere dadurch, dass die Spannvorrichtung einen Spannbügel mit einer ersten Zentrierflanke und einer zweiten Zentrierflanke umfasst, wobei die erste Zentrierflanke mit einer Zentrierflanke des ersten Kupplungsteils und die zweite Zentrierflanke mit einer Zentrierflanke des zweiten Kupplungsteils in geschlossener Stellung in Wirkkontakt stehen.

Weitere vorteilhafte Merkmale sind, dass der erste Kupplungsteil gegenüber dem zweiten Kupplungsteil zur kraftschlüssigen Verbindung des Wellenzapfens mit dem Kupplungskörper und zum Lösen der Verbindung über die Spannvorrichtung bewegbar ist, dass in geschlossener Stellung und bei eingeklemmtem Wellenzapfen zwischen dem ersten

Kupplungsteil und dem zweiten Kupplungsteil ein Spalt freigehalten ist, dass der erste Kupplungsteil auf einer Seite scharnierartig mit dem zweiten Kupplungsteil verbunden ist und dass auf der anderen Seite die Spannvorrichtung vorgesehen ist, und/oder dass die Spannvorrichtung eine Schraubverbindung zur Verbindung des ersten Kupplungsteils mit dem zweiten Kupplungsteil umfasst.

In vorteilhafter Weise kann die Erfindung derart ausgestaltet sein, dass die Spannvorrichtung einen Spannbügel umfasst, der einseitig scharnierartig mit einem Kupplungsteil und mit seiner anderen Seite mit dem anderen Kupplungsteil verbunden und/oder verbindbar ist, dass der Spannbügel eine erste Zentrierflanke und eine zweite Zentrierflanke umfasst, wobei die erste Zentrierflanke mit einer Zentrierflanke des ersten Kupplungsteils und die zweite Zentrierflanke mit einer Zentrierflanke des zweiten Kupplungsteils in geschlossener Stellung in Wirkkontakt stehen, dass die Klemmbacken zur Zentrierung des Wellenzapfens über Justiergewinde gegenüber dem Kupplungskörper bewegbar ausgeführt sind, dass die Klemmbacken Anlageflächen zur Anlage an den Wellenzapfen aufweisen und dass die Anlageflächen in geschlossener Stellung im Wesentlichen radiärsymmetrisch oder rotationssymmetrisch um die Drehachse des Kupplungskörpers verteilt sind und/oder dass der Wellenzapfen durch Spannen der Spannvorrichtung zwischen den Klemmbacken eingeklemmt ist.

Die erfindungsgemäße Walzenanordnung weist bevorzugt die Merkmale auf, dass die Walze über eine Wellenkupplung nach der vorangegangenen Beschreibung mit dem Maschinengestell gekoppelt ist, dass ein angetriebenes Förderband zur Förderung des Teigbandes vorgesehen ist, wobei die Geschwindigkeit des Förderbandes in Förderrichtung im Wesentlichen der Umfangsgeschwindigkeit der Walze entspricht und wobei zwischen dem Förderband und der Walze zumindest teilweise ein Walzenspalt zur Durchführung des Teigbandes vorgesehen ist, dass die Walze durch Öffnen des Kupplungskörpers entnehmbar ist und dass dabei der Antrieb, das Radiallager zur Lagerung der Antriebswelle und die Antriebswelle mit dem Maschinengestell verbunden ist, dass die Walze durch Öffnen des Kupplungskörpers entnehmbar ist und dass dabei der Antrieb, das Radiallager zur Lagerung der Lagerachse und die Lagerachse mit dem Maschinengestell verbunden ist und/oder dass der erste Kupplungsteil und die Lagerachse einstückig miteinander verbunden sind und/oder dass der erste Kupplungsteil und die Antriebswelle einstückig miteinander verbunden sind.

Die erfindungsgemäße Walzenanordnung umfasst eine Wellenkupplung, die eine leichte Wechselbarkeit der Walzen ermöglicht und darüber hinaus die Standzeiten und somit das Wartungsintervall und die Wartungsdauer optimiert.

Zu diesem Zweck weist die erfindungsgemäße Wellenkupplung einen teilbaren Kupplungskörper auf, der zur form- und kraftschlüssigen Halterung des Wellenzapfens eingerichtet ist. Der Kupplungskörper umfasst beispielsweise einen ersten Kupplungsteil sowie einen zweiten Kupplungsteil, wobei die beiden Kupplungsteile entlang einer Trennlinie voneinander getrennt sind. In dem Kupplungskörper ist eine Kupplungsöffnung zur Einführung des Wellenzapfens vorgesehen. Diese Kupplungsöffnung weist eine Innenkontur auf, die im Wesentlichen der Außenkontur des Wellenzapfens entspricht. Jedoch ist die Kontur der Öffnung zumindest abschnittsweise kleiner als die Außenkontur des Wellenzapfens. Über eine Spannvorrichtung können die Teile des Kupplungskörpers zueinander gespannt werden. Dadurch wird der Wellenzapfen in der Kupplungsöffnung eingeklemmt und kraftschlüssig verbunden. Durch diese kraftschlüssige, spielfreie Kupplung ist die Standzeit erhöht. Durch die erfindungsgemäße Spannvorrichtung sind weiters in vorteilhafter Weise eine schnelle Öffenbarkeit und eine schnelle Wechselbarkeit der Walzen ermöglicht.

Entlang der Kontur der Kupplungsöffnung sind Klemmbacken vorgesehen. Diese Klemmbacken weisen Anlageflächen auf, mit denen sie mit dem Wellenzapfen in Wirkkontakt bringbar sind. Die Klemmbacken können einstückig aus dem Kupplungskörper gebildet sein. Gemäß einer weiteren Ausführungsform können die Klemmbacken auch durch getrennte, mit dem Kupplungskörper verbundene Einzelelemente ausgeführt sein.

Ferner können die Klemmbacken, beispielsweise zur Zentrierung des Wellenzapfens, justierbar bzw. bewegbar im Kupplungskörper vorgesehen sein. Dies bedeutet, dass durch eine Verschiebung der Klemmbacken in geringem Maße die Drehachse der Walze mit der Drehachse des Kupplungskörpers in Übereinstimmung gebracht werden kann.

In bevorzugter Weise ist die erfindungsgemäße Wellenkupplung selbstzentrierend ausgeführt. Dies bedeutet, dass durch Schließen der Wellenkupplung und durch Spannen der Spannvorrichtung die Welle selbsttätig in eine Mittelposition befördert und in dieser Position fixiert wird. Beispielsweise ist dies durch eine diagonale Anordnung eines Rechtecksquerschnitts oder auch durch eine V-förmige Anordnung der Kupplungsöffnung und einem dreieckigen polygonförmigen Querschnitt des Wellenzapfens erreicht.

Eine weitere Begünstigung der Selbstzentrierung wird beispielsweise durch die symmetrische Teilung des Kupplungskörpers in den ersten und den zweiten Kupplungsteil erzielt. Die Trennungslinie verläuft dabei im Wesentlichen durch die Drehachse des Wellenzapfens.

Das Maschinengestell und die Walzenanordnung sind zur industriellen Herstellung von Backprodukten wie z.B. Keks geeignet und eingerichtet. Insbesondere betrifft dies auch die Steuerungs- und/oder Regelungseinheit, die mit der Steuerungseinheit einer Backmaschine verbunden werden kann.

Als polygonförmig sind erfindungsgemäß Formen bezeichnet, die beispielsweise einen dreieckigen, viereckigen, fünfeckigen, sechseckigen, siebeneckigen, oder mehreckigen Querschnitt haben. Aber auch ovale Formen, abgerundete Formen, Sternformen entsprechen der erfindungsgemäßen Definition einer Polygonform. Insbesondere sind von der Definition Formen von Querschnitten umfasst, die von einem mit der Drehachse konzentrisch angeordneten kreisrunden Querschnitt abweichen.

Die erfindungsgemäße Vorrichtung ist dazu geeignet und/oder eingerichtet, "in-line" in einer industriellen Fertigungsanlage für Lebensmittelprodukte verwendet zu werden.

In weiterer Folge wird die Erfindung anhand der Figuren weiter beschrieben.
Fig. 1 zeigt eine Schrägansicht einer möglichen Anordnung der erfindungsgemäßen Wellenkupplung und mehrerer erfindungsgemäßer Walzenanordnungen.
Fig. 2 zeigt ein Detail der erfindungsgemäßen Walzenanordnung.
Fig. 3 zeigt einen Schnitt durch die erfindungsgemäße Wellenkupplung, wobei die Schnittebene im Wesentlichen entlang einer Normalebene der Drehachse der Walze verläuft.
Fig. 4 zeigt eine erfindungsgemäße Wellenkupplung in einer Schnittdarstellung.
Fig. 5 zeigt eine weitere Schnittdarstellung der erfindungsgemäßen Wellenkupplung, wobei die Schnittebenen der Figuren 4 und 5 im Wesentlichen der Drehachse der Walze folgen.

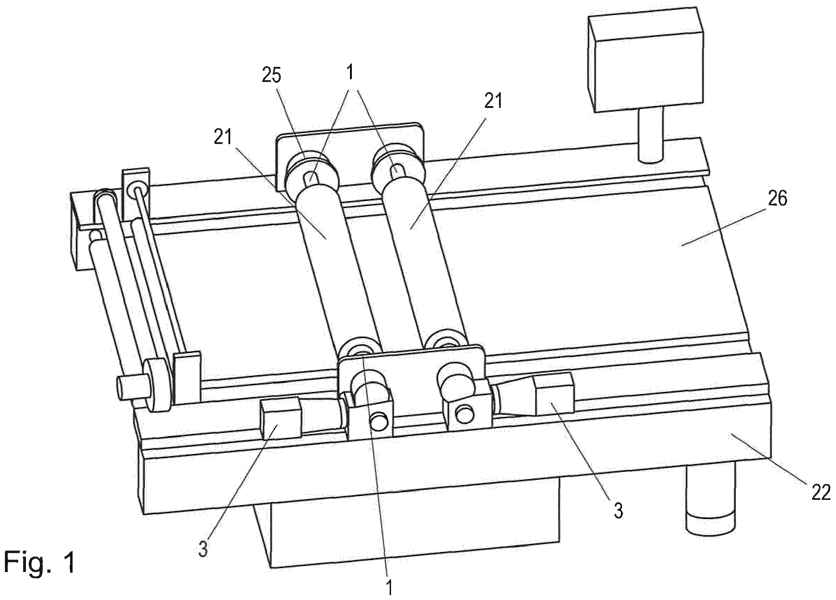

Fig. 1 zeigt eine Walzenanordnung, die zwei Walzen 21 umfasst. In unmittelbarer Nähe der Walzen 21 ist ein Förderband 26 vorgesehen. Die Walzen sind in dieser Ausführungsform als Ausstech- und/oder Nachformwalzen ausgeführt. Dabei wird ein Teigband auf dem Förderband 26 Richtung Walzen 21 befördert. Diese weisen Ausnehmungen und/oder Stege zum Ausstechen und Formen von Keksteig-Formkörpern auf.

Die Walzen 21 sowie das Förderband 26 sind mit einem Maschinengestell 22 verbunden. Die Walzen 21 sind über einen Antrieb 3 rotatorisch angetrieben. Zum Ausstechen und/oder Nachformen der Keksteig-Formkörper sind Walzen 21 vorgesehen. Um die Herstellung unterschiedlicher Keksteig-Formkörper zu ermöglichen, können die Walzen getauscht werden. Dazu ist die erfindungsgemäße Wellenkupplung vorgesehen.

Bevorzugt befinden sich, in der Darstellung der Fig. 1 nicht zu sehen, unterhalb des Förderbandes gummierte Gegenwalzen, die gegen den Druck der Walzen 21 wirken. Diese sind bevorzugt seitlich rotatorisch am Maschinengestell gelagert und rollen an der Innenseite des Förderbandes ab.

Die Wellenkupplung ist dazu geeignet, die Walze 21 bzw. deren Wellenzapfen 1 mit einer Lagerachse 25 bzw. mit einer Antriebswelle eines Antriebs 3 zu verbinden.

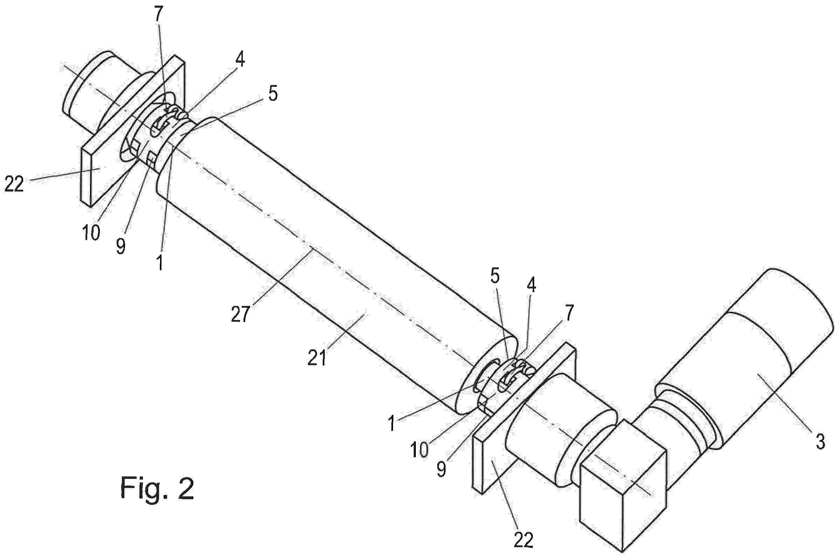

Fig. 2 zeigt eine Schrägansicht eines Details der erfindungsgemäßen Walzenanordnung. Eine Walze 21 weist beidseitig auskragende Wellenzapfen 1 auf. Diese Wellenzapfen sind dazu eingerichtet, über die erfindungsgemäße Wellenkupplung mit weiteren Komponenten verbunden zu werden. Insbesondere ist durch die erfindungsgemäße Wellenkupplung eine Verbindung zwischen dem hier nicht dargestellten Maschinengestellt 22 und der drehbaren Walze 21 herzustellen. Die Walze 21 ist über einen Antrieb 3 um eine Drehachse 27 rotatorisch antreibbar. Die Walze 21 ist beidseitig am Maschinengestell 22 gelagert. Die Lagerung umfasst in bevorzugter Weise zumindest ein Festlager sowie zwei Loslager, wobei ein Loslager auf der einen Seite und ein weiteres Loslager auf der anderen Seite der Walze 21 vorgesehen ist. Die Rotationslager sind fest mit dem Maschinengestell 22 verbunden. Dies bedeutet, dass die Lagerstellen im Wesentlichen starr mit dem Maschinengestell 22 verbunden sind. Die beweglichen Teile der Lagerungen sind drehbar und/oder bewegbar. Die Walze 21 samt Wellenzapfen 1 ist über die Wellenkupplung mit den Lagerstellen und insbesondere mit dem Antrieb 3 bzw. der Lagerachse 25 koppelbar. Dazu weist die Wellenkupplung einen Kupplungskörper 4 auf, der eine Kupplungsöffnung 5 zur Aufnahme der Wellenzapfen 1 umfasst. Der Kupplungskörper umfasst weiters zumindest einen ersten Kupplungsteil 9 sowie einen zweiten Kupplungsteil 10. Diese beiden Kupplungsteile sind über eine Spannvorrichtung 7 miteinander verbindbar oder zumindest zueinander bewegbar und spannbar.

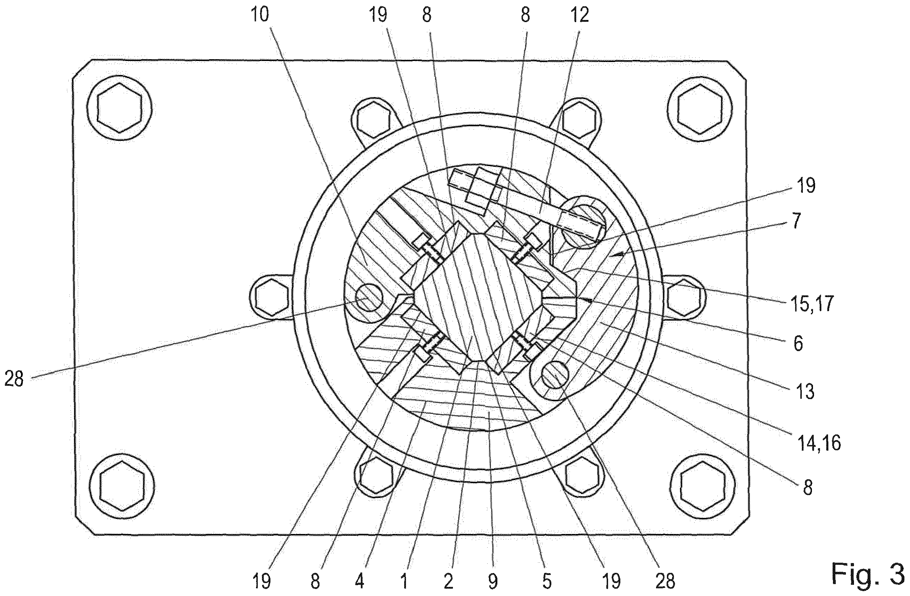

Fig. 3 zeigt einen Schnitt durch die erfindungsgemäße Walzenanordnung und insbesondere durch die erfindungsgemäße Wellenkupplung, wobei die Schnittebene im Wesentlichen einer Normalebene der Drehachse 27 entspricht. Die Schnittebene verläuft durch den Kupplungskörper und die Spannvorrichtung 7.

Der Wellenzapfen 1 mit polygonförmigem Querschnitt 2 ragt in die Kupplungsöffnung 5 des Kupplungskörpers 4. In der vorliegenden Ausführungsform ist der Querschnitt 2 als im Wesentlichen rechteckiger oder quadratischer Querschnitt ausgeführt.

Die Kupplungsöffnung 5 entspricht im Wesentlichen dem Querschnitt 2 des Wellenzapfens 1. Zur Verbindung weist der Kupplungskörper Klemmbacken 8 auf. Diese Klemmbacken 8 weisen an ihrer dem Wellenzapfen 1 zugewandten Seite jeweils eine Anlagefläche 19 auf. In geschlossener Stellung befinden sich die Anlageflächen 19 in direktem Kontakt mit dem Wellenzapfen 1 der Walze 21. Der Kupplungskörper 4 ist gemäß der vorliegenden Ausführung geteilt ausgeführt und umfasst einen ersten Kupplungsteil 9 und einen zweiten Kupplungsteil 10. Diese beiden Teile 9, 10 können über eine Spannvorrichtung 7 relativ zueinander bewegt werden. Insbesondere können die beiden Kupplungsteile 9, 10 über die Spannvorrichtung 7 fest miteinander verbunden werden. In der vorliegenden Ausführungsform sind die beiden Kupplungsteile 9, 10 scharnierartig über ein Drehgelenk 28 einseitig miteinander verbunden. Auf der anderen Seite des Kupplungskörpers 4 ist die Spannvorrichtung 7 vorgesehen. Der Kupplungskörper 4 ist entlang einer Teilungslinie 6 in den ersten Kupplungsteil 9 und den zweiten Kupplungsteil 10 geteilt. Über die Spannvorrichtung 7 ist der erste Kupplungsteil 9 mit dem zweiten Kupplungsteil 10 verbindbar. Dazu umfasst die Spannvorrichtung eine Schraubverbindung 12, über die direkt oder indirekt eine Verbindung des ersten Kupplungsteils mit dem zweiten Kupplungsteil hergestellt werden kann. In der vorliegenden Ausführungsform der Figur 3 ist diese Verbindung indirekt ausgeführt. Dies bedeutet, dass die Spannvorrichtung 7 eine Schraubverbindung 12 und einen Spannbügel 13 umfasst. Der Spannbügel 13 ist scharnierartig über ein Drehgelenk 28 mit dem ersten Kupplungsteil 9 verbunden. Die Schraubverbindung 12 ist dazu eingerichtet, den Spannbügel 13 mit dem zweiten Kupplungsteil 10 zu verbinden. Durch Festziehen der Schraubverbindung werden die beiden Kupplungsteile 9, 10 über den Spannbügel 13 fest miteinander verbunden.

In der vorliegenden Ausführungsform sind zur Befestigung der beiden Kupplungsteile Zentrierflanken vorgesehen. So weist der Spannbügel eine erste Zentrierflanke 14 sowie eine zweite Zentrierflanke 15 auf. Ferner ist der erste Kupplungsteil 9 mit einer Zentrierflanke 16 und der zweite Kupplungsteil mit einer Zentrierflanke 17 versehen. Bei Festziehen des Spannbügels 13 kommt es zu einer Anlage der ersten Zentrierflanke 14 mit der Zentrierflanke 16 des ersten Kupplungsteils 9.

Ferner kommt es bei Festziehen des Spannbügels 13 zur Anlage der zweiten Zentrierflanke 15 mit der Zentrierflanke 17 des zweiten Kupplungsteils. Die Flanken verlaufen in bevorzugter Weise schräg zur Bewegungsrichtung des Spannbügels 13, sodass bei Festziehen der Schraubverbindung 12 und/oder des Spannbügels 13 eine Zentrierung über die Zentrierflanken ermöglicht ist. Ferner sind die Zentrierflanken derart ausgerichtet, dass bei Festziehen des Spannbügels 13 und der Schraubverbindung 12 die beiden Kupplungsteile 9, 10 zueinander bewegt werden. Bevorzugt ist diese Anordnung der Zentrierflanken als keilförmige Anordnung ausgeführt. So bilden die erste und die zweite Zentrierflanke 14, 15 einen keilförmigen Abschnitt. In gleicher Weise bilden die Zentrierflanken 16, 17 der Kupplungsteile 9, 10 zusammen einen keilförmigen Abschnitt. Gemäß der vorliegenden Ausführungsform ist einer der keilförmigen Abschnitte fortsatzförmig ausgeführt und der andere keilförmige Abschnitt nutförmig ausgeführt. Durch Aneinanderdrücken der beiden keilförmigen Abschnitte wird der Kupplungskörper zentriert, geschlossen und/oder gespannt.Entlang der Kupplungsöffnung 5 sind Klemmbacken 8 vorgesehen. Diese Klemmbacken sind in bevorzugter Weise über Justiergewinde 18 bewegbar. Dadurch kann die Position der Klemmbacken 8 relativ zu dem Kupplungskörper 4 in geringem Maße verändert werden. Beispielsweise kann dadurch eine Zentrierung der Wellenzapfen 1 gegenüber der Drehachse 20 der Walze erfolgen.

Zum Wechsel der Walze 21 kann in der vorliegenden Ausführungsform die Schraubverbindung gelöst oder gelockert werden, sodass der Spannbügel 13 der Spannvorrichtung 7 um das Drehgelenk 28 weggeschwenkt werden kann. Dadurch trennen sich auch die erste und die zweite Zentrierflanke von den Zentrierflanken der Kupplungsteile 16, 17. In weiterer Folge ist die Verriegelung und Verbindung des ersten Kupplungsteils 9 zum zweiten Kupplungsteil 10 gelöst. Dieser kann dann um das Drehgelenk 28 geöffnet werden. Die Teilungslinie 6 ist derart angeordnet, dass bei Teilung des Kupplungskörpers 4 die Entnahme des Wellenzapfens 1 ermöglicht ist. In der vorliegenden Ausführungsform verläuft die Teilungslinie 6 im Wesentlichen durch die Drehachse 20 und durch die Symmetrieachse des Querschnitts 2 des Wellenzapfens 1.

Bei geschlossenem Kupplungskörper 4 ist über die Spannvorrichtung 7 und die Klemmbacken 8 eine formschlüssige Polygonverbindung hergestellt. Über die spezielle Ausgestaltung und insbesondere die Größe des Querschnitts 2 des Wellenzapfens 1 und der Kupplungsöffnung 5 ist darüber hinaus eine Klemmverbindung gegeben. So ist die Kupplungsöffnung 5 bzw. sind die Anlageflächen 19 der Klemmbacken 8 derart ausgestaltet, dass bei geschlossener Wellenkupplung der Wellenzapfen 1 eingeklemmt ist. Gegebenenfalls ist entlang der Teilungslinie 6 auch bei geschlossener Wellenkupplung ein Spalt 11 vorgesehen. Dieser ermöglicht das Einklemmen des Wellenzapfens 1, ohne dass die Klemmkraft durch Anlage der Kupplungsteile 9, 10 aneinander vermindert ist.

Auch über die Geometrie der Zentrierflanken bzw. über die Spannvorrichtung 7 ist der von der Wellenkupplung auf den Wellenzapfen 1 ausgeübte Druck bzw. die ausgeübte Flächenpressung einstellbar.

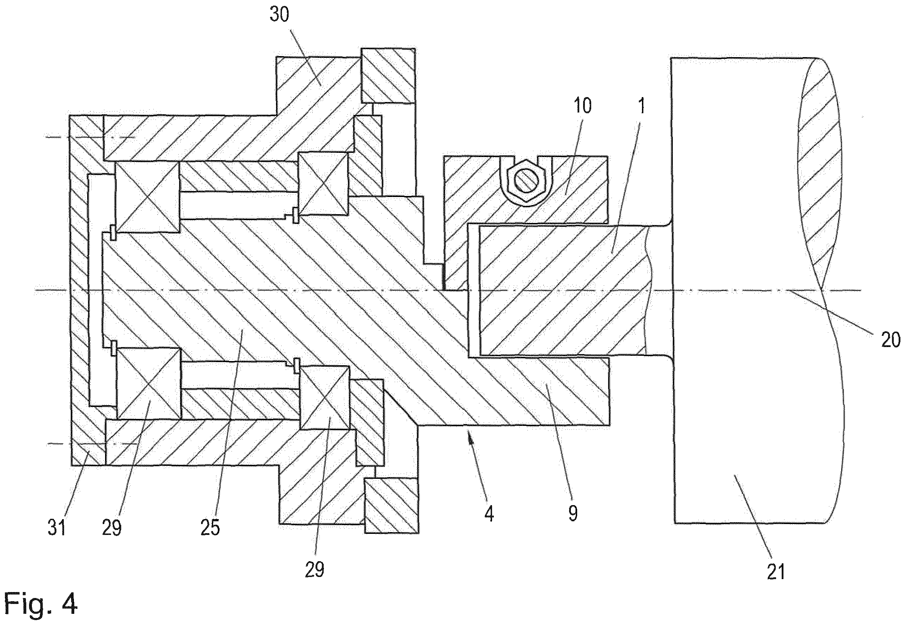

Fig. 4 zeigt einen weiteren Schnitt einer erfindungsgemäßen Walzenanordnung und/oder einer erfindungsgemäßen Wellenkupplung. Die Walze 21 weist einen Wellenzapfen 1 auf, der seitlich von der Walze 21 absteht. Dieser Wellenzapfen ist gemäß der vorliegenden Erfindung polygonförmig ausgeführt bzw. weist der Wellenzapfen einen polygonförmigen Querschnitt 2 auf. Dieser Wellenzapfen ist dazu eingerichtet mit dem Kupplungskörper 4 form- und kraftschlüssig verbunden zu werden. Der Kupplungskörper 4 ist mehrteilig ausgeführt und weist einen ersten Kupplungsteil 9 sowie einen zweiten Kupplungsteil 10 auf. Diese Teile sind über eine Spannvorrichtung 7 miteinander verbindbar und gegeneinander spannbar, sodass der Wellenzapfen 1 im Kupplungskörper 4 eingeklemmt ist. In der Darstellung der Figur 4 ist der Wellenzapfen 1 mit einer Lagerachse 25 verbunden. Diese Anordnung ist bevorzugt an jener Seite der Walze 21 vorgesehen, an der kein Antrieb angreift. An dieser Stelle ist die Walze lediglich gelagert. Dazu sind in der vorliegenden Ausführungsform zwei Radiallager 29 vorgesehen. Diese Radiallager sind in einem Lagerbock 30 gehaltert, wobei der Lagerbock 30 hülsenförmig oder mehrteilig ausgeführt sein kann. Ferner ist der Lagerbock 30 mit einem Lagerdeckel 31 verschlossen. Der Lagerbock 30 ist in bevorzugter Weise starr mit dem Maschinengestell 22 verbunden. Über die Radiallager 29 und den Lagerbock 30 ist die Walze 21 gegenüber dem Maschinengestell 22 rotatorisch gelagert. Gemäß einer Ausführungsform kann eines der beiden Radiallager 29 als Festlager ausgeführt sein.

Wird nun die Wellenkupplung geöffnet, um die Walze 21 zu entnehmen, so verbleiben die Lagerachse 25 sowie die Radiallager 29 fest am Maschinengestell angeordnet. Dies hat den erfindungsgemäßen Vorteil, dass der Lagerbock 30 nicht geöffnet werden muss und auch die Lager nicht von dem Wellenzapfen abgezogen werden müssen. Vielmehr kann über ein einfaches Betätigungselement die Wellenkupplung geöffnet und die Walze entnommen werden.

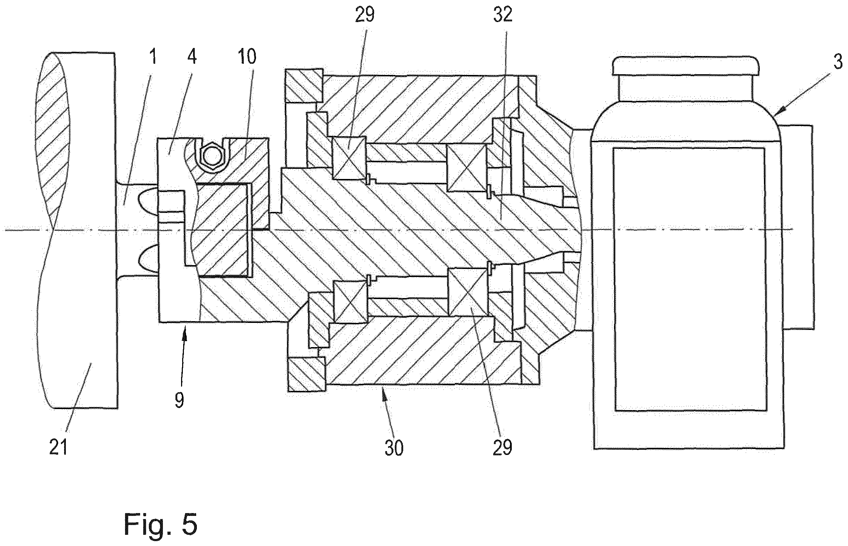

Fig. 5 zeigt einen Schnitt durch die antriebsseitige Wellenkupplung und deren Lagerung, wobei die Schnittebene im Wesentlichen der Schnittebene aus Fig. 4 entspricht. Wiederum ist eine Welle 21 über einen Wellenzapfen 1 mit polygonförmigem Querschnitt in einem Kupplungskörper 4 form- und kraftschlüssig eingeklemmt. Der Kupplungskörper entspricht im Wesentlichen der Ausführungsform der zuvor genannten Kupplungskörper umfassend einen mehrteiligen Kupplungskörper 4, der über eine Spannvorrichtung 7 schließbar und verriegelbar ausgeführt ist, wobei ein erster Kupplungsteil 9 und ein zweiter Kupplungsteil 10 derart zueinander gezogen werden, dass in der Kupplungsöffnung 5 des Kupplungskörpers 4 der Wellenzapfen 1 der Walze 21 eingeklemmt wird. Der Kupplungskörper 4 ist ferner mit der Antriebswelle 32 des Antriebs 3 verbunden. Die Antriebswelle 32 ist über zwei Radiallager 29 in einem Lagerbock 30 rotatorisch gelagert. In bevorzugter Weise ist eines der beiden Radiallager 29 als Festlager ausgeführt. Insbesondere ist jenes Lager als Festlager ausgeführt, das am nächsten zu dem Antrieb 3 liegt. Der Lagerbock 30 ist zur Aufnahme der Radiallager 29 eingerichtet. Wie bei den Beschreibungen der vorangegangenen Ausführungsformen angemerkt, ist der Lagerbock 30 beispielsweise als Hülse, schließbarer Lagerbock oder ähnlicher Körper ausgeführt, der dazu eingerichtet und geeignet ist, die Radiallager derart zu haltern, dass eine Rotationslagerung der Antriebswelle bzw. der Lagerachse ermöglicht ist. Der Antrieb 3 ist mit dem Maschinengestell 22 oder dem Lagerbock 30 drehstarr verbunden. Auch der Lagerbock 30 ist bevorzugt mit dem Maschinengestell 22 drehstarr verbunden. Dadurch ist einerseits eine Abstützung des Antriebs 3 gegenüber dem Maschinengestell 22 ermöglicht. Andererseits ist dadurch die Walze 21 bzw. deren Wellenzapfen 1 im Bereich des Antriebs 3 rotatorisch gelagert.

Um nun die Walze 21 auch im Bereich des Antriebs entfernen zu können, müssen lediglich die Spannvorrichtung 7 und der Kupplungskörper 4 geöffnet werden, um den Wellenzapfen 1 entnehmen zu können. Die Antriebswelle, die Radiallager 29 der Antriebswelle sowie der Antrieb verbleiben verbunden mit dem Maschinengestell 22.

Durch diese einfache Montierbarkeit und Demontierbarkeit ist auch eine Verschmutzung durch beispielsweise Öl verhindert.

### Bezugszeichen:

- 1: Wellenzapfen
- 2: Querschnitt
- 3: Antrieb
- 4: Kupplungskörper
- 5: Kupplungsöffnung
- 6: Teilungslinie
- 7: Spannvorrichtung
- 8: Klemmbacke
- 9: Erster Kupplungsteil
- 10: Zweiter Kupplungsteil
- 11: Spalt
- 12: Schraubverbindung
- 13: Spannbügel
- 14: Erste Zentrierflanke
- 15: Zweite Zentrierflanke
- 16: Zentrierflanke des ersten Kupplungsteils
- 17: Zentrierflanke des zweiten Kupplungsteils
- 18: Justiergewinde
- 19: Anlagefläche
- 20: Drehachse
- 21: Walze
- 22: Maschinengestell
- 23: Förderrichtung
- 24: Walzenspalt
- 25: Lagerachse
- 26: Förderband
- 27: Drehachse
- 28: Drehgelenk
- 29: Radiallager
- 30: Lagerbock
- 31: Lagerdeckel
- 32: Antriebswelle

## Patentansprüche

1. Wellenkupplung zur Kupplung eines Wellenzapfens (1) mit polygonförmigem Querschnitt (2) mit einem Antrieb (3) oder einer Lagerachse (25), umfassend einen rotatorisch antreibbaren Kupplungskörper (4), der eine Kupplungsöffnung (5) zur Aufnahme des Wellenzapfens (1) aufweist, wobei der Kupplungskörper (4) einen ersten Kupplungsteil (9) und einen zweiten Kupplungsteil (10) umfasst und entlang einer Teilungslinie (6) öffenbar ausgeführt ist wobei
die Teilungslinie (6) die Kupplungsöffnung (5) schneidet, wobei eine Spannvorrichtung (7) zur kraftschlüssigen Halterung des Wellenzapfens (1) in der Kupplungsöffnung (5) vorgesehen ist, und wobei die Kupplungsöffnung (5) zumindest teilweise durch Klemmbacken (8) gebildet ist, die in geschlossener Stellung über die Spannvorrichtung (7), bevorzugt flächig, an den Wellenzapfen (1) gedrückt sind, wobei die Spannvorrichtung (7) einen Spannbügel (13) mit einer ersten Zentrierflanke (14) und einer zweiten Zentrierflanke (15) umfasst,
**dadurch gekennzeichnet, dass**
die erste Zentrierflanke (14) mit einer Zentrierflanke (16) des ersten Kupplungsteils (9) und die zweite Zentrierflanke (15) mit einer Zentrierflanke (17) des zweiten Kupplungsteils (10) in geschlossener Stellung in Wirkkontakt stehen.

2. Wellenkupplung nach Anspruch 1, **dadurch gekennzeichnet, dass** der erste Kupplungsteil (9) gegenüber dem zweiten Kupplungsteil (10) zur kraftschlüssigen Verbindung des Wellenzapfens (1) mit dem Kupplungskörper (4) und zum Lösen der Verbindung über die Spannvorrichtung (7) bewegbar ist.

3. Wellenkupplung nach Anspruch 1 oder 2, **dadurch gekennzeichnet, dass** in geschlossener Stellung und bei eingeklemmtem Wellenzapfen zwischen dem ersten Kupplungsteil (9) und dem zweiten Kupplungsteil (10) ein Spalt (11) freigehalten ist.

4. Wellenkupplung nach einem der Ansprüche 1 bis 3, **dadurch gekennzeichnet, dass** der erste Kupplungsteil (9) auf einer Seite scharnierartig mit dem zweiten Kupplungsteil (10) verbunden ist und dass auf der anderen Seite die Spannvorrichtung (7) vorgesehen ist.

5. Wellenkupplung nach einem der Ansprüche 1 bis 4, **dadurch gekennzeichnet, dass** die Spannvorrichtung (7) eine Schraubverbindung (12) zur Verbindung des ersten Kupplungsteils (9) mit dem zweiten Kupplungsteil (10) umfasst.

6. Wellenkupplung nach einem der Ansprüche 1 bis 5, **dadurch gekennzeichnet, dass** der Spannbügel (13) einseitig scharnierartig mit einem Kupplungsteil (9,10) und mit seiner anderen Seite mit dem anderen Kupplungsteil (9,10) verbunden und/oder verbindbar ist.

7. Wellenkupplung nach einem der Ansprüche 1 bis 6, **dadurch gekennzeichnet, dass** die Klemmbacken (8) zur Zentrierung des Wellenzapfens (1) über Justiergewinde (18) gegenüber dem Kupplungskörper (4) bewegbar ausgeführt sind.

8. Wellenkupplung nach einem der Ansprüche 1 bis 7, **dadurch gekennzeichnet, dass** die Klemmbacken (8) Anlageflächen (19) zur Anlage an den Wellenzapfen (1) aufweisen und dass die Anlageflächen (19) in geschlossener Stellung im Wesentlichen radiärsymmetrisch oder rotationssymmetrisch um die Drehachse (20) des Kupplungskörpers verteilt sind.

9. Wellenkupplung nach einem der Ansprüche 1 bis 8, **dadurch gekennzeichnet, dass** der Wellenzapfen durch Spannen der Spannvorrichtung zwischen den Klemmbacken eingeklemmt ist.

10. Walzenanordnung zur Bearbeitung von Formkörpern oder Teigbändern zur Herstellung von Backprodukten wie beispielsweise Keks und dergleichen, umfassend eine Walze (21) und ein Maschinengestell (22), **dadurch gekennzeichnet, dass** die Walze (21) über eine Wellenkupplung nach einem der vorangegangenen Ansprüche mit dem Maschinengestell gekoppelt ist.

11. Walzenanordnung nach Anspruch 10, **dadurch gekennzeichnet, dass** ein angetriebenes Förderband (26) zur Förderung des Teigbandes vorgesehen ist, wobei die Geschwindigkeit des Förderbandes (26) in Förderrichtung (23) im Wesentlichen der Umfangsgeschwindigkeit der Walze (21) entspricht und wobei zwischen dem Förderband (26) und der Walze (21) ein Walzenspalt (24) zur Durchführung des Teigbandes vorgesehen ist.

12. Walzenanordnung nach einem der Ansprüche 10 oder 11, **dadurch gekennzeichnet, dass** die Walze (21) durch Öffnen des Kupplungskörpers entnehmbar ist und dass dabei der Antrieb (3), das Radiallager zur Lagerung der Antriebswelle (32) und die Antriebswelle (32) mit dem Maschinengestell verbunden ist.

13. Walzenanordnung nach einem der Ansprüche 10 bis 12, **dadurch gekennzeichnet, dass** die Walze (21) durch Öffnen des Kupplungskörpers entnehmbar ist und dass dabei der Antrieb (3), das Radiallager zur Lagerung der Lagerachse (25) und die Lagerachse (25) mit dem Maschinengestell verbunden ist.

14. Walzenanordnung nach einem der Ansprüche 10 bis 13, **dadurch gekennzeichnet, dass** der erste Kupplungsteil (9) und die Lagerachse (25) einstückig miteinander verbunden sind und/oder dass der erste Kupplungsteil (9) und die Antriebswelle (32) einstückig miteinander verbunden sind.

## Claims

1. Shaft coupling for coupling a shaft journal (1) with a polygonal cross-section (2) to a drive (3) or a bearing axle (25), comprising a rotationally drivable coupling body (4), which comprises a coupling opening (5) for receiving the shaft journal (1), wherein the coupling body (4) comprises a first coupling part (9) and a second coupling part (10) and is configured to be openable along a partition line (6) wherein
the partition line (6) intersects the coupling opening (5), wherein a clamping device (7) for the force-locking connection of the shaft journal (1) in the coupling opening (5) is provided, and wherein the coupling opening (5) is at least partially formed by clamping jaws (8), which in the closed position are pressed by the clamping device (7), preferably flatly, onto the shaft journal (1),
wherein
the clamping device (7) comprises a clamping bracket (13) with a first centring flank (14) and a second centring flank (15),
**characterised in that**
in the closed state the first centring flank (14) is in active contact with a centring flank (16) of the first coupling part (9) and the second centring flank (15) is in active contact with a centring flank (17) of the second coupling part (10).

2. Shaft coupling according to claim 1 **characterised in that** the first coupling part (9) is movable relative to the second coupling part (10) for the force-locking connection of the shaft journal (1) to the coupling body (4) and for loosening the connection via the clamping device (7).

3. Shaft coupling according to claim 1 or 2 **characterised in that** in the closed state and with the shaft journal clamped between the first coupling part (9) and the second coupling part (10) a gap (11) is kept free.

4. Shaft coupling according to any one of claims 1 to 3 **characterised in that** the first coupling part (9) is connected on one side in a hinge-like manner to the second coupling part (10) and that the clamping device (7) is provided on the other side.

5. Shaft coupling according to any one of claims 1 to 4 **characterised in that** the clamping device (7) comprises a screw connection (12) for connecting the first coupling part (9) to the second coupling part (10) .

6. Shaft coupling according to any one of claims 1 to 5 **characterised in that** the clamping bracket (13) is on one side connected and/or connectable in a hinge-like manner to one coupling part (9, 10) and on its other side to the other coupling part (9, 10).

7. Shaft coupling according to any one of claims 1 to 6 **characterised in that** the clamping jaws (8) are movable in relation to the coupling body (4) for centring the shaft journal (1) by way of adjusting threads (18).

8. Shaft coupling according to any one of claims 1 to 7 **characterised in that** the clamping jaws (8) have contact surfaces (19) for applying to the shaft journal (1) and **in that** the contact surfaces (19) in the closed state are essentially radially symmetrically or rotationally symmetrically distributed about the rotational axis (20) of the coupling body.

9. Shaft coupling according to any one of claims 1 to 8 **characterised in that** the shaft journal is clamped between the clamping jaws by tensioning the clamping device.

10. Roller arrangement for processing moulded bodies or dough sheets in order to produce baked products, such as, for example, biscuits and suchlike, comprising a roller (21) and a machine frame (22) **characterised in that** the roller (21) is connected to the machine frame by way of a shaft coupling according to any one of the preceding claims.

11. Roller arrangement according to claim 10 **characterised in that** a driven conveyor belt (26) for conveying the dough sheet is provided, wherein the speed of the conveyor belt (26) in the conveying direction (23) essentially corresponds to the circumferential speed of the roller (21) and wherein between the conveyor belt (26) and the roller (21) a roller gap (24) is provided for the dough sheet to pass through.

12. Roller arrangement according to any one of claims 10 to 11 **characterised in that** the roller (21) can be removed by opening the coupling body and that the drive (3), the radial bearing for bearing the drive shaft (32) and the drive shaft (32) is connected to the machine frame.

13. Roller arrangement according to any one of claims 10 to 12 **characterised in that** the roller (21) can be removed through opening the coupling body and **in that** the drive (3), the radial bearing for bearing the bearing axle (25) and the bearing axle (25) is connected to the machine frame.

14. Roller arrangement according to any one of claims 10 to 13 **characterised in that** the first coupling part (9) and the bearing axle (25) are connected to each other in one piece and/or **in that** the first coupling part (9) and the drive shaft (32) are connected to each other in one piece.

## Revendications

1. Accouplement d'arbre, destiné à accoupler un tourillon d'arbre (1) de section transversale (2) polygonale avec un entraînement (3) ou un axe de palier (25), comprenant un organe d'accouplement (4) susceptible d'être entraîné en rotation qui comporte un orifice d'accouplement (5), destiné à recevoir le tourillon d'arbre (1), l'organe d'accouplement (4) comprenant une première pièce d'accouplement (9) et une deuxième pièce d'accouplement (10) et étant réalisé de sorte à pouvoir s'ouvrir le long d'une ligne de séparation (6), la ligne de séparation (6) recoupant l'orifice d'accouplement (5), un système de serrage (7) étant prévu, pour le maintien par complémentarité de force du tourillon d'arbre (1) dans l'orifice d'accouplement (5) et l'orifice d'accouplement (5) étant conçu au moins en partie par des mâchoires de serrage (8) qui en position fermée sont appuyées par l'intermédiaire du système de serrage (7), de préférence à plat sur le tourillon d'arbre (1), le système de serrage (7) comprenant un étrier de serrage (13) pourvu d'un premier flanc de centrage (14) et d'un deuxième flanc de centrage (15), **caractérisé en ce qu'**en position fermée, le premier flanc de centrage (14) est en contact actif avec un flanc de centrage (16) de la première pièce d'accouplement (9) et le deuxième flanc de centrage (15) est en contact actif avec un flanc de centrage (17) de la deuxième pièce d'accouplement (10) .

2. Accouplement d'arbre selon la revendication 1, **caractérisé en ce que** la première pièce d'accouplement (9) est déplaçable par rapport à la deuxième pièce d'accouplement (10) pour la liaison par complémentarité de force du tourillon d'arbre (1) avec l'organe d'accouplement (4) et pour la désolidarisation de la liaison par l'intermédiaire du système de serrage (7).

3. Accouplement d'arbre selon la revendication 1 ou 2, **caractérisé en ce qu'**en position fermée et lorsque le tourillon d'arbre est enserré, une fente (11) reste libre entre la première pièce d'accouplement (9) et la deuxième pièce d'accouplement (10).

4. Accouplement d'arbre selon l'une quelconque des revendications 1 à 3, **caractérisé en ce que** sur un côté, la première pièce d'accouplement (9) est reliée à la manière d'une charnière avec la deuxième pièce d'accouplement (10) et **en ce que** sur l'autre côté est prévu le système de serrage (7).

5. Accouplement d'arbre selon l'une quelconque des revendications 1 à 4, **caractérisé en ce que** le système de serrage (7) comprend un assemblage par vis (12), destiné à relier la première pièce d'accouplement (9) avec la deuxième pièce d'accouplement (10).

6. Accouplement d'arbre selon l'une quelconque des revendications 1 à 5, **caractérisé en ce que** sur un côté, l'étrier de serrage (13) est relié et/ou susceptible d'être relié à la manière d'une charnière avec une pièce d'accouplement (9,10) et par son autre côté, est relié et/ou susceptible d'être relié avec l'autre pièce d'accouplement (9,10).

7. Accouplement d'arbre selon l'une quelconque des revendications 1 à 6, **caractérisé en ce que** les mâchoires de serrage (8) pour le centrage du tourillon d'arbre (1) sont conçues en étant déplaçables par l'intermédiaire de filets d'ajustage (18) par rapport à l'organe d'accouplement (4).

8. Accouplement d'arbre selon l'une quelconque des revendications 1 à 7, **caractérisé en ce que** les mâchoires de serrage (8) comportent des surfaces d'appui (19), destinées à s'appuyer sur le tourillon d'arbre (1) et **en ce qu'**en position fermée, les surfaces d'appui (19) sont distribuées sensiblement en symétrie radiale ou en symétrie rotationnelle autour de l'axe de rotation (20) de l'organe d'accouplement.

9. Accouplement d'arbre selon l'une quelconque des revendications 1 à 8, **caractérisé en ce que** le tourillon d'arbre est enserré par serrage du système de serrage entre les mâchoires de serrage.

10. Ensemble de cylindres, destiné à traiter des corps moulés ou des bandes de pâte pour la fabrication de produits de boulangerie, comme par exemple des biscuits et similaires, comprenant un cylindre (21) et un châssis de machine (22), **caractérisé en ce que** le cylindre (21) est accouplé par l'intermédiaire d'un accouplement d'arbre selon l'une quelconque des revendications précédentes avec le châssis de machine.

11. Ensemble de cylindres selon la revendication 10, **caractérisé en ce qu'**une bande de convoyage (26) entraînée est prévue pour convoyer la bande de pâte, la vitesse de la bande de convoyage (26) dans la direction de convoyage (23) correspondant sensiblement à la vitesse périphérique du cylindre (21) et entre la bande de convoyage (26) et le cylindre (21) étant prévue une fente de laminage (24) pour le passage de la bande de pâte.

12. Ensemble de cylindres selon l'une quelconque des revendications 10 ou 11, **caractérisé en ce que** le cylindre (21) est susceptible d'être retiré par ouverture de l'organe d'accouplement et **en ce qu'**à cet effet, l'entraînement (3), le roulement radial destiné au logement de l'arbre d'entraînement (32) et l'arbre d'entraînement (32) sont reliés avec le châssis de machine.

13. Ensemble de cylindres selon l'une quelconque des revendications 10 à 12, **caractérisé en ce que** le cylindre (21) est susceptible d'être retiré par ouverture de l'organe d'accouplement et **en ce qu'**à cet effet, l'entraînement (3), le roulement radial destiné au logement de l'axe de palier (25) et l'axe de palier (25) sont reliés avec le châssis de machine.

14. Ensemble de cylindres selon l'une quelconque des revendications 10 à 13, **caractérisé en ce que** la première pièce d'accouplement (9) et l'axe de palier (25) sont reliés l'un à l'autre en monobloc et/ou **en ce que** la première pièce d'accouplement (9) et l'arbre d'entraînement (32) sont reliés l'un à l'autre en monobloc.
